# EUROPEAN PATENT SPECIFICATION

(11) **EP 2 642 120 B1**
(45) Date of publication and mention of the grant of the patent: **07.03.2018**
(21) Application number: 12160164.5
(22) Date of filing: 19.03.2012
(51) Int. Cl.: F03D 7/02, F03D 80/00

(54) **Power backup system for a wind turbine**
Leistungsreservesystem für eine Windturbine
Système d'alimentation de secours pour éolienne

(43) Date of publication of application: 25.09.2013
(73) Proprietor: Multiplex ApS, 4623 LI. Skensved (DK)
(72) Inventor: Willumsen, Niels, 4623 Ll. Skensved (DK); Nielsen, Michael Nørgaard, 4632 Bjæverskov (DK)
(74) Representative: Chas. Hude A/S

(56) References cited:
- EP-A2- 2 078 854
- EP-A2- 2 282 055
- US-A1- 2004 124 711
- US-A1- 2011 162 924

## Description

The invention relates to a method of providing a backup power to maintain the critical functions of a wind turbine when primary power source is lost for a wind turbine according to claim 1. EP 2282055 A2 and EP 2078854 A2 disclose a power backup system for a wind turbine.

Generally, electricity-producing windmills, a.k.a. wind turbines, are becoming larger and larger, and the development of the wind turbines is often directed towards turbines that may provide increased energy capacity. This development means that the blades of the wind turbine are getting longer having the effect that the height of the wind towers must be increased accordingly. Currently, there are at least two different types of wind turbines: onshore wind turbines and offshore wind turbines.

The size increase of the wind turbines increases the challenges of ensuring the safety of the wind turbines in order to ensure that the turbines are not operated in unsuitable conditions. One of the most important issues is when a wind turbine ceases to operate, i.e. the rotor stops rotating, as the nacelle must be turned into the wind to ensure that the wind does not damage the turbine. Such a situation may occur e.g. when an interruption occurs between the power connection between the wind turbine and the network grid, and the wind turbine loses its power connection for operating. This is an especially critical issue in case the wind turbine is an offshore wind turbine, where an interruption in a network grid may cut off the power supply to an entire cluster of offshore wind turbines, such as those in an offshore wind farm.

A loss of connection to a power network grid often means that the wind turbine loses its power to operate and control of the wind turbine, as the wind turbines are generally not self-sufficient in their power supply. Hence, should the wind turbine lose its primary power supply, a power backup system may be needed to ensure that that the wind turbine can maintain its critical functions, such as rotating the nacelle and the rotor into the wind, i.e. providing yaw movement to the wind turbine. In case the wind turbine is not capable of rotating the nacelle and the rotor into the wind, there is a risk that the wind turbine could tilt and collapse should the wind become too powerful as the construction profile of a wind turbine is designed to have optimum strength when the rotor and the nacelle are turned into the wind.

Generally, the backup power supplies are provided for example as diesel or gasoline (fossil fuel) generators powering up in case a wind turbine loses its main supply of power. However, there are considerable issues with regard to the lifetime of the generators, the lifetime of the fuel in relation to the lifetime of the wind turbine. The expected lifetime of a wind turbine is approximately 25 years, and the gasoline or diesel generators have a significantly shorter estimated lifetime than the wind turbine, or approximately 10 years for generators arranged in an offshore wind turbine. The shorter estimated lifetime of the generator is partly due to the fact that the generator engines are made of metals being highly susceptive to corrosion. This means that it is expected that a fossil fuel generator has to be replaced approximately three times during the expected lifetime of the wind turbine.

A further issue with fossil fuel generators is that the fuel has only an expected lifetime of approximately three years if kept in a fuel tank, which means that the fuel has to be replaced at regular intervals in order to maintain a fully functioning backup system. The replacement procedure of the fossil fuel is such that in order to replace the old fuel, the old fuel must first be drained from the tanks into a holding tank, and subsequently a fresh batch of fuel may be provided. Afterwards, the old fuel must be destroyed as the fuel may be degraded to such a degree that the diesel cannot be used for other purposes.

Yet a further issue with regard to fossil fuel generators is that the service interval of the generators is relatively frequent, or about every three months, in order to ensure that the engine is fully lubricated, and that all moving parts are fully functional.

Thus, the frequent service interval is highly costly, especially when viewing offshore wind turbines, as each service visitation requires high cost water-based vehicles, and a significant number of service operators being able to perform the service/maintenance visit.

The provision of wind turbines in an electricity grid is often an attempt to reduce the greenhouse gasses and pollutants in energy production, where the greenhouse gasses and pollutants are often the bi-products of electricity production using fossil fuels, such as electricity production using coal burning. The electricity providers are usually attempting to provide "green" products for the consumer when referring to the electricity provided by wind turbines, and the provision of a fossil fuel backup generator may blemish the "green" profile of their product.

Thus, there is a need for a power backup system for wind turbines that does not utilise fossil fuels and that reduces the need for maintenance service and can have an estimated lifetime matching the lifetime of the wind turbines.

In accordance with the invention, there is provided a method of providing a backup power to maintain the critical functions of a wind turbine when primary power source is lost for a wind turbine according to claim 1. Offshore wind turbines are wind turbines constructed in a body of water, such as in the sea. The wind turbines are often mounted in a wind park that may be seen as a group of wind turbines being positioned in a predefined area of the sea, which is at a distance from the shoreline. The wind turbines are connected by at least one power transmission cable to the shore, where the cable can transfer the electricity produced by the wind turbines inland, and where the primary power source to operate the wind turbines is transmitted from land towards the water-based wind turbines. It is a known risk factor that the power connection may be lost due to the at least one cable being disconnected, which means that the offshore wind turbines lose their primary power source.

The power backup system in accordance with the invention means that if a primary power source of a wind turbine is lost, i.e. the wind turbine goes offline, the power backup system may provide auxiliary power to replace the primary power source in order to operate the wind turbine safely. The provision of at least one fuel cell in the power backup system means that a system producing electricity with a few to none moving parts is provided. Furthermore, the system may be seen as greener than systems using combustion to produce kinetic energy transformed into electricity using a generator as a fuel cell, such as a methanol fuel cell, only emits H₂O and CO₂ while a combustion engine produces pollutant exhaust that includes a number of harmful particles.

Usually, a fuel cell has a long expected lifetime, where the expected lifetime of a hydrocarbon fuel cell may be at least equal to the expected lifetime of a wind turbine, which is usually 25 years. This means that when a wind turbine is erected and a backup power system according to the invention is provided, the fuel cell will not have to be replaced during the lifetime of the wind turbine, under normal circumstances.

A further advantage of a backup power system according to the invention is that the production of backup energy using a fuel cell complements the green profile of a wind producing company as both the wind production using the wind turbine and the backup power system may be seen as environmentally friendly.

The fuel source of the backup power system may be a source providing a fluid-based fuel, where the expected lifetime of the fuel may be significantly longer than the expected lifetime of a diesel fuel or a gasoline fuel. This means that the fluid-based fuel does not have to be replaced at the same interval as the diesel or gasoline and thus requires significantly less costs for maintaining a fully operative backup power system. As an example, the expected lifetime of a methanol fuel source is approximately 25 years, which is similar to the expected lifetime of wind turbines, and should the wind turbine be used for more than its expected lifetime, > 25 years, it may be necessary to exchange the methanol fuel source in order for the backup power system to be operative.

Within the meaning of the present invention, the term "rechargeable battery" means an accumulator having one or more electrochemical cells, where their electrochemical reactions are electrically reversible, i.e. the cells may be both charged and discharged. The term may also mean a group of one or more electrochemical cells or a group of one or more rechargeable batteries arranged in a serial or parallel connection.

The control system of the wind turbine has a power consumption profile where the power consumption often comes in bursts, where the normal operations of the control system may require a continuous power feed and where large operations require a burst of power, such as rotating the nacelle upon change of the wind direction acting up on the wind turbine.

A wind turbine needing to rotate the nacelle and thus the rotor into the wind (provide yaw movement) may use a large amount of energy to provide the yaw, i.e. a burst of energy. The power backup system may be provided in such a way that the fuel cells produce enough energy to power the yaw movement of the wind turbine directly, and/or where the rechargeable battery functions as an energy buffer. When the rechargeable battery functions as an energy buffer, the power output of the fuel cells may be reduced as the battery has enough power to feed the yaw movement of the nacelle and rotor.

In one embodiment of the invention, the power backup system may further comprise an electrical current converter for converting the direct current from the rechargeable battery to AC current in order to supply the wind turbine with an auxiliary energy source. Often, the control systems of wind turbines have a power requirement that includes the provision of an AC current in order to operate the control system. The reason for this is that the primary power supply, which is often transmitted from a land base, is transferred at AC current as the energy loss is less during the transfer of the electricity. Thus, when the primary AC power supply is lost, the backup power supply must provide an energy source compatible with the primary power supply as that simplifies the construction of the control system. Thus, by providing a DC/AC converter, or alternatively an inverter, the auxiliary power supply may communicate electrically with the same power interface and in the same manner as the primary power supply without having any effect on the power transmission inside the control system. This means that the control system does not have to be modified to receive the auxiliary power.

In one embodiment of the invention, the fuel cell may be a proton exchange membrane fuel cell. Such a fuel cell may also be known as a polymer electrolyte membrane fuel cell, where fuel and air are fed into the fuel cell, and where water, heat and possibly CO₂ are exhausted from the system. Such a fuel cell produces electricity using a chemical reaction, where the chemical reaction produces an electrical current. The electrical current produced by the fuel cell may be used as the source of electricity to charge the rechargeable battery of the backup power system according to the invention.

In one embodiment of the invention, the fuel cell is a hydrocarbon fuel cell, namely a direct methanol fuel cell. A hydrocarbon fuel cell, such as the direct methanol fuel cell, is capable of providing a high energy yield per unit fuel, where the overall reaction for a methanol fuel cell is:

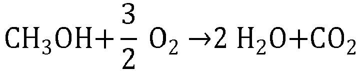

Thus, the methanol reacts with the oxygen and produces a source of energy, water and carbon dioxide. Furthermore, the advantages of using a hydrocarbon source of fuel for the fuel cell are that the fuel may be stored in liquid form prior to use under atmospheric pressure. An example of a suitable methanol fuel cell may be the EFOY PRO fuel cell manufactured by SFC Energy AG, Eugen-Sanger Ring 7, 85649 Bunnthal-Nord, Germany.

Furthermore, a hydrocarbon fuel cell may utilise a number of different types of fuel, where a methanol fuel cell may use a fossil-based fuel, such as that produced by natural gas, or be a renewable-based fuel, such as methanol produced from biomass. This means that a methanol-based fuel cell may use renewable carbons and may therefore reduce the carbon footprint compared to a fossil based methanol fuel.

In one embodiment of the invention, the power backup system may comprise two or more fuel cells. A power backup system using multiple fuel cells may increase the reliability of the power backup system as the malfunction of one fuel cell will not cripple the power backup system as a whole. Thus, if one cell malfunctions, the remaining fuel cells may provide the necessary energy production to maintain a functioning charging activity to the recyclable battery. Should the system contain a single fuel cell capable of producing enough energy to maintain the charging activities, the malfunction of the fuel cell may disable the charging activities of the fuel cell until it has been replaced or repaired. Thus, multiple fuel cells minimise the risk of a complete power loss when a fuel cell is in non-working condition.

Furthermore, should the energy requirements be vast, a plurality of fuel cells may be interconnected to provide enough energy to power up the rechargeable battery or to power up the control system of a wind turbine.

In one embodiment of the invention, the fuel source may be a fuel tank in fluid communication with the fuel cell. The fuel tank may be a tank used for propelling the fuel into the fuel cell (fuel pump) or a tank releasing fuel into the fuel cell (released). In one embodiment, the fuel tank is a fuel tank holding a liquid fuel, such as methanol, where the tank is not pressurised. This means that the fuel is not under constant pressure and therefore does not provide strain to the fuel tank. Such a fuel tank reduces the necessity for a short service interval as a pressurised fuel tank must be pressure-tested at regular intervals, while a non-pressurised tank has fewer requirements for service and maintenance.

In one embodiment of the invention, the backup power system may further comprise a communication system enabling the remote monitoring of the fuel source, the at least one fuel cell and the rechargeable battery. The backup power system is of such a kind that all operations of the system may be controlled remotely using the remote communication system. The remote communication system may be used to test the fuel cell at regular intervals without having to send a maintenance crew to overview and test the system. The fuel cell, the rechargeable battery, and the fuel source may be individually tested or tested as a system along with all other optional elements of the system. This means that a remotely based crew can test the system at regular intervals and/or continuously monitor the system in order to ensure that the system will be fully functional when the primary power of the wind turbine is disabled. The remote communication system may be used in a method of providing backup power to a wind turbine, in a method of operating a backup power system and in a wind turbine having a backup power system according to the invention. The provision of a remote monitoring/communication system in an offshore wind turbine may reduce the carbon footprint as the need to send a boat or a floating vessel to perform maintenance is reduced significantly as most boats are powered by engines using fossil fuel such as diesel.

The invention relates to a method of providing a backup power to maintain the critical functions of a wind turbine when primary power source is lost for a wind turbine according to claim 1. In one embodiment of the invention, the method may further comprise the step of providing an electrical current converter for converting a direct current from the rechargeable battery to AC current in order to supply the wind turbine with an auxiliary energy source for

In one embodiment of the method, the provided fuel cell may be a proton exchange membrane fuel cell. A non-claimed aspect further relates to a method of operating a backup power system for a wind turbine comprising the steps of: providing a rechargeable battery within or in the vicinity of a wind turbine, where the rechargeable battery provides a source of electrical power to a control system of the wind turbine, monitoring the charge level of the rechargeable battery, providing a charging current to the rechargeable battery from a charging current source, when the charge level of the rechargeable battery is below a predetermined value in order to recharge the battery to a full charge and to ensure that the rechargeable battery has sufficient charge to power the control system of the wind turbine during a power interruption, choosing a charging current source being powered by a primary electrical supply of the wind turbine when the primary electrical supply is available, or choosing a charging current source that is powered by a fuel cell, when the primary electrical supply is not available.

The method of operating the backup power system may be used along with the method of providing the power backup system. The method of operating the backup power system ensures that the rechargeable battery is always fully charged, or when the charging level of the battery is below a predetermined level, the charging current sources are always topping up on the charge so that the rechargeable battery always has sufficient power stored in order to power up the control system of the wind turbine. Thus, the wind turbine may turn the nacelle up into the wind ensuring that the wind turbine is not damaged if the primary power is lost or is capable of stopping the rotor should such an action be deemed necessary. A non-claimed aspect of the invention further relates to a wind turbine for the production of electricity having a power backup system comprising: at least one fuel cell converting the chemical energy from a fuel into electrical energy through a chemical reaction with oxygen and having an electrical outlet, a fuel source for providing the fuel to the fuel cell, at least one rechargeable battery capable of receiving an electrical charge and discharging an electrical charge, where the rechargeable battery is in electrical communication with the electrical outlet of the fuel cell for supplying an electrical charge to the rechargeable battery, and where the rechargeable battery provides an auxiliary power source to the wind turbine.

In one embodiment of the invention, the wind turbine may be an offshore wind turbine. A backup power source is very important for an offshore wind turbine as the risk of losing the primary power source is significantly higher than for e.g. an onshore wind turbine as explained earlier. However, the system may equally be used for any other type of wind turbine should a backup power system be necessary.

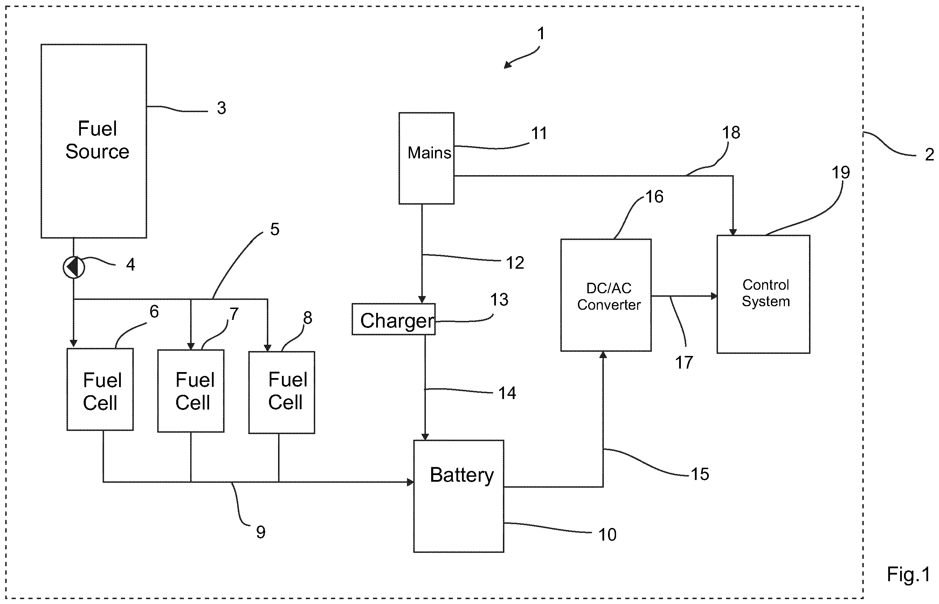

The invention is explained in detail below with reference to the drawings, in which
Fig. 1 is a schematic diagram of a backup power system according to the invention.

Fig. 1 shows a schematic diagram of a power backup system 1 according to the invention. The power backup system 1 is arranged inside a wind turbine 2 in close proximity to a wind turbine or where the system is in electrical communication with a wind turbine 2. The power backup system comprises three methanol fuel cells 6, 7, 8 being fed by a fuel source 3, in this example a fuel tank holding methanol fuel. The fuel may be pumped out of the fuel tank 3 using a fuel pump 4 ensuring that the fuel is fed into the fuel cells at a predetermined rate, or a variable rate, based on the required production of electricity by the fuel cells 6, 7, 8. The fuel pump 4 may also be a plurality of fuel pumps that may be controlled collectively or individually in order to ensure that the fuel flows evenly into the fuel cells or that the flow is different for each fuel cell, respectively.

For a wind turbine requiring a primary power source of approximately 1000W, the power capacity of the fuel cells may be chosen with a view to ensuring that the auxiliary power provided by the fuel cells is at least equal to the power requirements of the wind turbine. The power capacity of the fuel cells may further be chosen so that two of the cells provide sufficient power to meet the power requirements of the wind turbine in order to ensure redundancy if one of the fuel cells is disabled. This means that each fuel cell delivers at least 500W.

When the methanol is fed into the fuel cells, and the cells are in operation, the fuel cell produces an electrical charge transmitted to a rechargeable battery 10 via an electrical transmission line 9. Thus, the fuel cells 6,7,8 are capable of charging the rechargeable battery 10 in order to ensure that the battery 10 has sufficient power capacity to provide auxiliary power to the wind turbine 2.

The fuel cells 6, 7, 8 are utilised to recharge the battery 10 in case a primary power source 11 is not available to the control system 19 of the wind turbine 2. The primary power source 11 may be an electrical charge transmitted to the wind turbine from a remote location, such as a power grid. Should the primary power source 11 be disabled, the fuel cells are capable of taking over the power delivery to the control system 19.

When the primary power source 11 is available, the primary power source 11 is connected to a battery charger 13 via an electrical connection. Subsequently, the charger 13 is connected to the rechargeable battery 10 via an electrical connection in order to ensure that the battery may be charged by the primary power source when available. Hence, the rechargeable battery may be charged either by the primary power source 11 or the fuel cells 6, 7, 8 depending on whether or not the primary power source is available.

The primary power source 11 is also used to power up the control system of the wind turbine when available. This means that the use of the power backup system is circumvented during normal conditions, and the rechargeable battery 10 does not power the control system 19 of the wind turbine unless the primary power source is not available. The primary power source 11 is usually provided in the form of a two or a three-phase AC current connected by an electrical connection 18 to the control system so that the primary power source does not need to be transformed before it is used by the control system 19 thereby increasing the efficiency of the primary power source. Primarily, the increase in efficiency is due to a usually significant energy loss when a current is transformed from AC to DC or vice versa.

However, the battery 10 of the power backup system usually delivers a DC current, which may be unusable for the control system 19 without being transformed beforehand. For that purpose, the battery 10 may be connected to a DC/AC converter via an electrical connection 15, where the converter (inverter) converts the direct current to an alternating current. Subsequently, the alternating current output of the converter 16 is fed to the control system 19 via an electrical connection 17 so that when the primary power source 11 is offline, the power backup system 1 may provide an auxiliary power for the control system 19 of the wind turbine.

The following example is only to be seen as one possibility of a power backup system in accordance with the invention and is not to be seen as limiting the scope of the invention.

Main components of the power backup system.

### Fuel tank

The tank may be made of stainless steel. Expected content is 1000 I. This material will maintain the methanol without degrading for the requested 25 years of life. Stainless steel pipes having a 4 mm diameter may connect the tank to the fuel cells. There is no requirement of maximal distance between tank and fuel cells. This is determined by the fuel pumps. Only one fuel pipe connecting all fuel cells is required as the fuel pumps are suction pumps not requiring any pressure from the tank or any return fuel pipe. The Tank may be of such a nature that it can either stand on a stainless steel base or hang on brackets on a wall. It may have a shut off valve used during transportation, and it may have lift rings on top in order for hoist material to lift the tank from the transporting ship on to the wind turbine island or back. No visible fuel gauge is needed - fuel gauge will be incorporated in the fuel cell management.

### The fuel cells

There may be 3 fuel cells of approximately 500W in the system. Two cells may be enough, but for redundancy purpose three is the preferred choice. The system could also work with a single 1500W fuel. Should a future wind turbine have higher energy demands, one or more extra fuel cells can be implemented into the system. The fuel cells will be an upscaled version of the existing 90W EFOY PRO fuel cell or a combination of a number of fuel cells. All system hoses may be stainless steel pipes. The heat exchanger may be all stainless steel. The fuel cells may be arranged to sit in a frame system, next to each other, in order to optimise inspection and service as well as keeping fuel pipes and cables as short as possible. The fuel cells may all be parallel connected to the battery by means of minimum 2, 5 mm² cables, where a red cable may be positive and a black cable may be negative.

### Exhaust

Fuel cells provide 2 types of exhaust: water and warm air. The exhaust is approx. 0,5L water pr. 1,0l consumed methanol. The water may be drained from the installation. The 500W fuel cell will produce an output of approx. 5,5l water per 24 hrs. or 16,5L water for three fuel cells. The water may be led by an 8 mm silicone hose into the exterior of a power backup system housing and/or the wind turbine tower. The water is clean - any methanol content is usually significantly smaller than any maximum allowed values. The silicone hose may have passage alongside the warm air from the heat exchanger to prevent the water from freezing in the hose during cold seasons.

The warm air from the heat exchanger may have an air temperature of approx. 45 degrees C. A system may provide the ability for the user to select whether the warm air should remain inside an enclosure of the system during cold seasons for self-heating purposes and/or should be led out into the open during warm seasons for cooling purposes. The warm air is usually purely warm air and does not contain any content of methanol. The air may be diverted through a 100 mm diameter flexible pipe system.

### Output power

The output positive and negative may be connected with 2, 5 mm² cables to a Lithiumion battery. Each fuel cell may provide 48V and approx. 10,5A of current. The total output of three cells may therefore be approx. 48V and 31,5A. The 2, 5 mm² cable will maintain the 10,5A current as long as each fuel cell is connected to the battery by separate cables. Should it be necessary to connect the fuel cells on one set of cables, larger cables may be applied, such as 6 mm².

### Communication with the fuel cells

Each fuel cell may be connected to a communication system, through which the user/owner can access each fuel cell to overview service intervals, fuel status, hrs. run etc. The communication may be provided by means of HyperTerminal through a RS232 port, but the communication may be adapted/converted to the communication system of the particular wind turbine in order for the fuel cells to be a natural part of the daily communication with the wind turbine and its backup power system. Alternative communication platforms could also be other than above-mentioned, such as LAN or USB.

### Lithium Battery

A battery bank consisting of Li-Ion batteries may be connected to achieve 48V and approx. 800 Ah. This along with the output of the fuel cells may correspond to the continuous and intermittent power requirements of the wind turbine. Should a future wind turbine model require more power, a bigger battery bank can be installed. A BMS (Battery Management system) may control and overview the charge, discharge and status of each of the cells in the battery bank. The BMS may be an important component to secure the performance of the battery bank throughout the expected 25 years of lifetime. Battery cells from Winston Battery, Taiwan, called Thundersky, may be used, and a BMS developed and made by Clayton Power, Denmark, may be used.

During normal operation of the wind turbine, the battery bank may be charged (trickle charged) by a standard 48V charger made by Clayton Power from Denmark or Prime Power from Sweden. The charger may be mounted close to the batteries by means of cables red / black 2, 5 mm². The cables may be fixed with screw terminals to the charge socket of the BMS. The battery cells may be installed in a stainless steel casing with lift rings and brackets to be used for fixation of the battery. The casing may have a lid that can open for service purposes. The output from the battery may also also take place through the BMS. The output terminal may be solid copper, and the cables connecting the BMS with the inverter may be mounted by means of ring terminals M10 stainless screws.

### Communication with the battery

The BMS may be equipped with a CAN-bus. This may be converted into the communication platform of the wind turbine in order for the owner/user to overview the status of the batteries, such as battery bank voltage, cell voltage, temperatures of the cells etc. The communication platform could also be LAN, USB or other known types of communication platforms.

### The inverter

The inverter may be one of many existing units on the market. Basic specs are 48V Dc input, 400V AC output in 3 phases. Potential manufacturers are Victron, Studer or PBQ. The choice of inverter may depend mainly on the efficiency and price of the inverter. The efficiency is important in order to optimise the runtime of the batteries vs. the power need of the wind turbine. The inverter may also have lift rings and brackets for fixation to the floor and/or wall. All cabling in and out of the inverter may be made according to current rules and regulations for the specific load - particularly observing the rules for the AC side.

### Communication with the inverter

The inverter may have a RS232 output for external communication/overview. This may be adapted into the communication system of the wind turbine in order for the owner/user to overview the status of the inverter, such as output voltage, currents etc. The communication platform could also be LAN, USB or other known types of communication platforms.

## Claims

1. A method of providing backup power to maintain the critical functions of a wind turbine (2) when primary power source (11) is lost for a wind turbine comprising the steps of:
- providing at least two direct methanol fuel cells (6, 7, 8) converting chemical energy from methanol into electrical energy through a chemical reaction with oxygen,
- providing a fuel source (3) for providing methanol to the fuel cell,
- providing an energy buffer in the form of at least one rechargeable battery (10) capable of receiving an electrical charge and discharging an electrical charge,
- connecting said direct methanol fuel cells to said rechargeable battery electrically in parallel, -monitoring the charge level of the rechargeable battery,
- connecting the at least one rechargeable battery to a wind turbine control system (19) ensuring that the wind turbine control system has sufficient power to operate in case of the power to the wind turbine being interrupted,
- providing a primary power source (11) to power the control system of the wind turbine during normal operating conditions,
- circumventing the power backup system during normal operating conditions,
- providing current from the rechargeable battery to the wind turbine control system when the primary power source is disabled, and when the charge level of the rechargeable battery is below a predetermined value the rechargeable battery is provided with a charging current source powered by a direct methanol fuel cell of said fuel cells (6, 7, 8).

2. A method according to claim 1, wherein the method further comprises the step of providing an electrical current converter (17) for converting a direct current from the rechargeable battery to AC current in order to supply the wind turbine with an auxiliary energy source.

3. A method according to any of the preceding claims, wherein the provided fuel cells are proton exchange membrane fuel cells.

4. A method according to any of the preceding claims where the backup power is provided to an offshore wind turbine.

5. A method according to any of the preceding claims where the rechargeable battery is provided within or in the vicinity of the wind turbine.

6. A method according to any of the preceding claims where the charging current source being powered by a primary electrical supply of the wind turbine when the primary electrical supply is available.

7. A method according to any of the preceding claims where the fuel source is provided as a fuel tank holding methanol fuel.

8. A method according to claim 7 where the fuel is pumped out of the fuel tank ensuring that the fuel is fed into the fuel cells based on the required production of electricity by the fuel cells.

9. A method according to claim 8, where the fuel is pumped using a plurality of fuel pumps that may be controlled collectively or individually.

10. A method according to any of the preceding claims where the power backup system is used to provide power to the wind turbine to rotate the nacelle and the rotor into the wind.

## Patentansprüche

1. Ein Verfahren zum Bereitstellen von Backup-Energie, um die kritischen Funktionen einer Windturbine (2) zu erhalten, wenn eine primäre Energiequelle (11) für eine Windturbine ausgefallen ist, umfassend die folgenden Schritte:
- Bereitstellen von mindestens zwei Gleichstrom-Methanol-Brennstoffzellen (6, 7, 8), die chemische Energie von Methanol durch eine chemische Reaktion mit Sauerstoff in elektrische Energie umwandeln,
- Bereitstellen einer Brennstoffquelle (3) zur Versorgung der Brennstoffzelle mit Methanol,
- Bereitstellen eines Energie-Puffers in Form von mindestens einer aufladbaren Batterie (10), die in der Lage ist, eine elektrische Ladung aufzunehmen und eine elektrische Ladung abzugeben,
- Verbinden jener Gleichstrom-Methanol-Brennstoffzellen mit jener aufladbaren Batterie, elektrisch in Parallelschaltung,
- Überwachen des Ladestatus der aufladbaren Batterie,
- Verbinden der mindestens einen aufladbaren Batterie mit einem Windturbinen-Kontrollsystem (19), was sicherstellt, dass das Windturbinen-Kontrollsystem ausreichend Energie für den Betrieb hat, in dem Fall, dass die Energieverbindung zur Windturbine unterbrochen ist,
- Bereitstellen einer primären Energiequelle (11), um das Kontrollsystem der Windturbine unter normalen Betriebsbedingungen mit Energie zu versorgen,
- Umgehen des Energie-Backupsystem unter normalen Betriebsbedingungen,
- Versorgen des Windturbinen-Kontrollsystems mit Strom aus der aufladbaren Batterie, wenn die primären Energiequelle ausfällt, und wobei, wenn der Ladestatus der aufladbaren Batterie unter einem vorher festgelegten Wert ist, die Batterie mit einer Ladestromquelle versorgt wird, die durch eine Gleichstrom-Methanol-Brennstoffzelle jener Brennstoffzellen (6,7,8) mit Energie versorgt wird.

2. Ein Verfahren gemäß Anspruch 1, wobei das Verfahren außerdem den Schritt des Bereitstellens eines elektrischen Stromwandlers (17) umfasst, zum Umwandeln eines Gleichstroms von der aufladbaren Batterie in Wechselstrom, um die Windturbine mit einer Ersatz-Energiequelle zu versorgen.

3. Ein Verfahren gemäß einem der vorhergehenden Ansprüche, wobei die bereitgestellten Brennstoffzellen Protonenaustauschmembran-Brennstoffzellen sind.

4. Ein Verfahren gemäß einem der vorhergehenden Ansprüche, wobei die Backup-Energie für eine Offshore-Windturbine bereitgestellt wird.

5. Ein Verfahren gemäß einem der vorhergehenden Ansprüche, wobei die aufladbare Batterie innerhalb oder in der Nähe der Windturbine bereitgestellt wird.

6. Ein Verfahren gemäß einem der vorhergehenden Ansprüche, wobei die Ladestromquelle durch eine primäre elektrische Einspeisung der Windturbine mit Energie versorgt wird, wenn die primäre elektrische Einspeisung verfügbar ist.

7. Ein Verfahren gemäß einem der vorhergehenden Ansprüche, wobei die Brennstoffquelle als ein Brennstofftank, der Methanol enthält, bereitgestellt wird.

8. Ein Verfahren gemäß Anspruch 7, wobei der Brennstoff aus dem Brennstofftank gepumpt wird, was sicherstellt, dass der Brennstoff in die Brennstoffzellen eingespeist wird, basierend auf der erforderlichen Produktion von Elektrizität durch die Brennstoffzellen.

9. Ein Verfahren gemäß Anspruch 8, wobei der Brennstoff unter Verwendung einer Vielzahl von Brennstoffpumpen gepumpt wird, die gemeinsam oder einzeln gesteuert werden können.

10. Ein Verfahren gemäß einem der vorhergehenden Ansprüche, wobei das Energie-Backupsystem verwendet wird, um die Windturbine mit Energie zu versorgen, um die Gondel und den Rotor in den Wind zu drehen.

## Revendications

1. Procédé pour procurer une alimentation de secours pour maintenir les fonctions critiques d'une turbine éolienne (2) lorsqu'une source d'énergie primaire (11) est perdue pour une turbine éolienne, comprenant les étapes consistant à :
- disposer au moins deux piles à combustible à méthanol directes (6, 7, 8) convertissant de l'énergie chimique à partir de méthanol en énergie électrique à l'aide d'une réaction chimique avec l'oxygène,
- disposer une source de carburant (3) pour délivrer du méthanol à la pile à combustible,
- disposer un tampon d'énergie sous la forme d'au moins une batterie rechargeable (10) susceptible de recevoir une charge électrique et de décharger une charge électrique,
- connecter électriquement en parallèle lesdites piles à combustibles à méthanol directes à ladite batterie rechargeable,
- contrôler le niveau de charge de la batterie rechargeable,
- connecter la batterie rechargeable au nombre d'au moins une à un système de commande de turbine éolienne (19), de façon à garantir que le système de commande de turbine éolienne ait une puissance suffisante pour fonctionner dans le cas où l'énergie vers la turbine éolienne est interrompue,
- disposer une source d'énergie primaire (11) pour alimenter le système de commande de la turbine éolienne durant des conditions de fonctionnement normales,
- contourner le système de sauvegarde d'énergie durant des conditions de fonctionnement normales,
- délivrer un courant à partir de la batterie rechargeable au système de commande de turbine éolienne lorsque la source d'énergie primaire est désactivée, et, lorsque le niveau de charge de la batterie rechargeable est inférieur à une valeur prédéterminée, la batterie rechargeable est dotée d'une source de courant de charge alimentée par une pile à combustible à méthanol directe desdites piles à combustible (6, 7, 8).

2. Procédé selon la revendication 1, dans lequel le procédé comprend de plus l'étape consistant à disposer un convertisseur de courant électrique (17) pour convertir un courant continu à partir de la batterie rechargeable en un courant alternatif de façon à alimenter la turbine éolienne avec une source d'énergie auxiliaire.

3. Procédé selon l'une quelconque des revendications précédentes, dans lequel les piles à combustible fournies sont des piles à combustible à membrane d'échange de protons.

4. Procédé selon l'une quelconque des revendications précédentes, dans lequel l'alimentation de secours est disposée sur une turbine éolienne en mer.

5. Procédé selon l'une quelconque des revendications précédentes, dans lequel la batterie rechargeable est disposée à l'intérieur de la turbine éolienne ou au voisinage de celle-ci.

6. Procédé selon l'une quelconque des revendications précédentes, dans lequel la source de courant de charge est alimentée par une alimentation électrique primaire de la turbine éolienne lorsque l'alimentation électrique primaire est disponible.

7. Procédé selon l'une quelconque des revendications précédentes, dans lequel la source de carburant est fournie sous la forme d'un réservoir de carburant contenant du carburant méthanol.

8. Procédé selon la revendication 7, dans lequel le carburant est pompé à partir du réservoir de carburant, de façon à garantir que le carburant soit délivré dans les piles à combustible en fonction de la production d'électricité par les piles à combustible désirée.

9. Procédé selon la revendication 8, dans lequel le carburant est pompé à l'aide d'une pluralité de pompes à carburant qui peuvent être commandées collectivement ou individuellement.

10. Procédé selon l'une quelconque des revendications précédentes, dans lequel le système d'alimentation de secours est utilisé pour délivrer de l'énergie à la turbine éolienne de façon à faire tourner la nacelle et le rotor dans le sens du vent.
